# EUROPEAN PATENT APPLICATION

(11) **EP 4 807 083 A1**
(43) Date of publication of application: **16.09.2026**
(21) Application number: 26162666.7
(22) Date of filing: 05.03.2026
(51) Int. Cl.: E02F 9/22, E02F 9/26, E02F 9/20

(54) **DYNAMIC VELOCITY LIMITATION OF A MOBILE WORKING MACHINE**

(30) Priority: 12.03.2025 IT 202500005050
(71) Applicant: Robert Bosch GmbH, 70442 Stuttgart (DE)
(72) Inventor: Lasrado, Adrian John, 6020 Innsbruck (AT); Eret, Egor, 89077 Ulm (DE); Brix, Norman, 89340 Leipheim (DE); Alberti, Andrea, 89077 Ulm (DE)

(57) **Abstract**

The present invention relates a method for determining a maximum driving velocity of a mobile working machine, the mobile working machine comprising a main body and a kinematic, which is configured to move an object with respect to the main body, the method comprising the following steps:
a. Determine a load of said mobile working machine;
b. Determine a maximum driving velocity of said mobile working machine based on said load or based on an information dependent on said load..

## Description

### TECHNICAL FIELD

This invention resides within the domain of control systems for mobile machines, and more specifically, it addresses the challenge of enhancing both safety and operational efficiency through the implementation of a dynamic limitation strategy.

### PRIOR ART

Mobile machines, encompassing a wide range of heavy equipment such as excavators, wheel loaders, telescopic handlers, and cranes, typically operate in demanding environments and are often required to perform near the limits of their capabilities to achieve optimal productivity. However, pushing these machines to their performance boundaries, particularly when handling heavy loads or navigating challenging terrain, significantly elevates the risk of accidents, including potentially catastrophic events like tipping or collisions. Traditional safety measures, which often rely on static limitations like fixed speed governors and pre-defined load charts, prove inadequate in addressing these dynamic risks. Their inherent inflexibility fails to account for the complex interplay between the machine's constantly changing state, the weight and distribution of its payload, and the nuances of the environment in which it operates. This static approach often leads to unnecessarily conservative operation, thereby hindering productivity and overall efficiency.

Existing solutions sometimes employ additional sensors, such as angle sensors at each joint of the machine, to attempt to capture the machine's pose. However, such additions increase system complexity and cost, introducing more potential points of failure. Furthermore, these systems frequently lack the crucial element of real-time environmental awareness, diminishing their capacity to anticipate and mitigate potential hazards effectively.

Scope of the present invention is, therefore, to provide a method for changing over transmission stages of a transmission arrangement, which enables to overcome the above mentioned problem.

### SUMMARY

The present invention stems from the innovative concept of dynamically managing a mobile working machine's operating limits based on a real-time understanding of its state and its surroundings. This could be achieved for example by intelligently combining information about the machine's load, its kinematic pose, its steering dynamics, and the environment in which it operates.

In one embodiment of the present invention, a method for determining the maximum permissible driving velocity of a mobile working machine is disclosed. The mobile working machine, comprising a main body and a kinematic structure for manipulating objects, benefits from a dynamic velocity control strategy. This method commences by determining the current load acting upon the machine. Subsequently, the maximum driving velocity is calculated, not as a fixed limit, but rather as a value intricately linked to the determined load. This dynamic coupling between load and velocity ensures that the machine can operate at higher speeds when safe to do so, directly boosting productivity without compromising safety.

A further refinement of this embodiment involves calculating the machine's center of gravity. This is achieved by combining the determined load with information about the pose of the kinematic structure. The center of gravity, a critical factor governing the machine's stability, becomes a key input in determining the maximum driving velocity. This nuanced approach, considering both load and balance, allows for a more precise and less restrictive safety envelope, enabling the machine to operate closer to its true capabilities.

In yet another embodiment, the steering angle of the mobile working machine is incorporated into the maximum velocity calculation. Recognizing that steering maneuvers, especially when combined with a load, can significantly impact stability, the system dynamically adjusts the allowable speed based on the current steering angle. This real-time adaptation enhances safety during dynamic operations, mitigating the risk of tipping during turns.

A more sophisticated embodiment extends the system's awareness beyond the machine itself by incorporating environmental information. By detecting external objects within the machine's operational sphere, the system calculates an environment-based maximum velocity. This velocity reflects the constraints imposed by the presence of obstacles, terrain variations, or other potential hazards. The system intelligently selects the more restrictive of the load-based and environment-based maximum velocities, ensuring safe operation even in complex and dynamic surroundings.

Finally, the present invention provides a method for actively enforcing these dynamically calculated velocity limits. This method involves continuously comparing the machine's actual driving velocity with the calculated maximum allowable velocity. Should the actual velocity exceed the safe limit, the system intervenes, actively limiting the machine's speed. This active intervention transforms the calculated limits from mere recommendations into enforced safety constraints, preventing potentially dangerous situations and ensuring the operator remains within the safe operating envelope. This active control strategy, deeply integrated with the machine's drive system, provides a robust and reliable safety mechanism.

This multifaceted approach to dynamic limitation, combining internal state awareness with external environmental perception, allows for a significant leap forward in mobile machine safety and operational efficiency. This invention allows the machine to operate closer to its optimal performance envelope while simultaneously enhancing safety and mitigating the risk of accidents.

### BRIEF DESCRIPTION OF THE FIGURES

The present invention is described with reference to the enclosed figures wherein the same reference numbers refer to the same parts and/or to similar parts and/or to corresponding parts of the system. In the figures:
Figure 1 shows a mobile working machine on which a method of the present invention can be adopted;
Figure 2 shows a flow chart of the method for determining a maximum driving velocity according to an embodiment of the present invention.

### DETAILED DESCRIPTION

In the following, the present invention is described with reference to particular embodiments as shown in the enclosed figures. Nevertheless, the present invention is not limited to the particular embodiments described in the following detailed description and shown in the figures, but rather the embodiments described simply exemplify several aspects of the present invention, the scope of which is defined by the claims.

Further modifications and variations of the present invention will be clear for the person skilled in the art. The present description is thus to be considered as including all said modifications and/or variations of the present invention, the scope of which is defined by the claims.

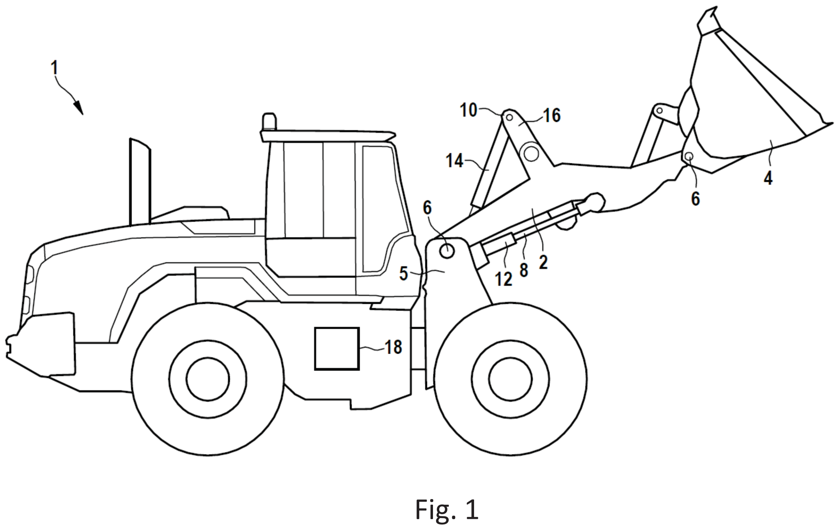

Figure 1 depicts a wheel loader 1 as an example of a mobile working machine. It is important to understand that the wheel loader serves merely as an illustration; the mobile working machine need not include a working kinematic system like that of a wheel loader.

The wheel loader 1 features a boom assembly composed of several boom elements designed to handle loads. These boom elements, illustrated here as a lift arm 2 (also known as a "boom arm") and a bucket 4, are rotatably or pivotally connected to each other and to a boom carrier 5 (e.g., the chassis) of the wheel loader 1 by means of axles. The boom elements 2 and 4 are actuated by actuators 8 and 10, meaning their rotational or pivoting motion around the axles is effected by the movement of these actuators. The boom elements and the bucket are also commonly known as kinematic of the mobile working machine, since they are able to move an object/a load with respect to the chassis.

A first actuator 8 is provided for the lift arm 2, causing its movement or rotation relative to the boom carrier 5. Similarly, a second actuator 10 is provided for the bucket 4, causing its movement or rotation (tilting). The actuators notably comprise hydraulic cylinders 12 and 14-a first hydraulic cylinder 12 for the first actuator 8 and a second hydraulic cylinder 14 for the second actuator 10. The movement of the bucket 4 is transmitted or articulated via a linkage 16, which can be considered a component of the bucket's actuator 10.

The actuators 8 and 10 are controlled by a control unit 18. In the case of hydraulic cylinders 12 and 14, directional control valves regulate the flow of hydraulic fluid to the cylinders.

The mobile working machine 1 is equipped with multiple wheels, enabling its movement. This movement can lead to collisions between the machine and external objects (such as another mobile working machine or a tree). Such collisions pose a serious risk to both the operators and the machines themselves. Collision avoidance functions are generally employed to mitigate this risk.

Such functions typically utilize environmental sensors (radar sensors, ultrasonic sensors, cameras, and lidar) to perceive the surroundings and detect obstacles, other vehicles, or people nearby. The collected data is then analyzed by a control system to identify potential collisions. Upon detecting potential collision risks, the machine can trigger warnings or alarms. These alerts can be visual, displayed on screens or LED indicators; auditory, using warning sounds; or haptic, through vibrations within the vehicle cabin, to alert the driver or operators.

Advanced systems can automatically activate emergency braking or reduce speed to prevent collisions. These systems may be capable of autonomous action to stop or slow the machine when a collision risk is imminent.

Some mobile machines are equipped with driver-assistance systems designed to help the operator avoid collisions. These systems can include steering assistance, lane-keeping assistance, adaptive cruise control, and other functions to ensure safe operation without collisions. By defining zones or areas where the machine can operate safely and implementing zone detection systems, the machine can be programmed to perform specific actions or adjust its speed within designated areas.

The precise implementation of these measures depends on the type of machine, its intended applications, and the applicable safety standards. A combination of different technologies and systems typically provides the most reliable collision avoidance for mobile machines.

This description omits a detailed explanation of a specific collision avoidance function because the method of the present invention can be applied to any collision avoidance function.

Based on the pressures within the hydraulic cylinders 31 and 32, the forces necessary to hold the tool and payload in their respective states of motion can be determined. In the analysis, the two force paths are considered individually. These force paths can be converted into torques around the connecting pins of the work equipment segments.

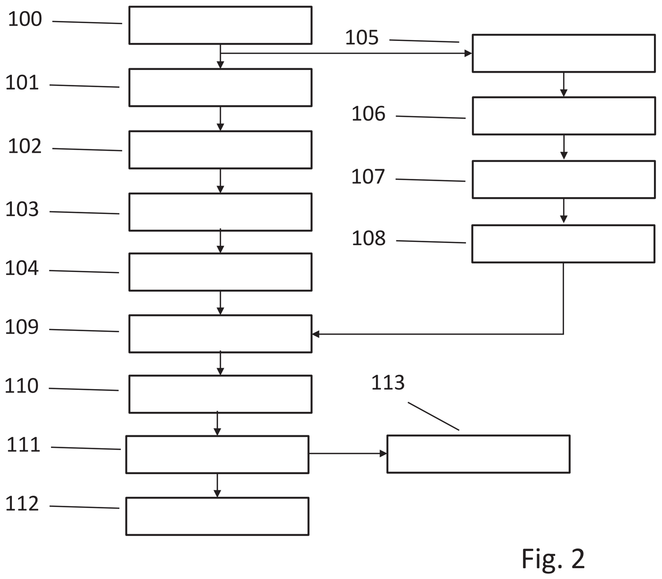

Figure 2 details a method for dynamically determining the maximum safe driving velocity of a mobile working machine, taking into account both the machine's state and its surrounding environment. This method represents a significant departure from traditional approaches that rely on fixed speed limits, allowing for a more nuanced and responsive safety strategy.

The process begins in step 100, initiating the velocity determination method. The subsequent step, 101, focuses on calculating the pose of the mobile working machine. This involves determining the position and orientation of the machine's various components, including its chassis, boom and bucket. Established techniques from the state of the art can be employed for this purpose, such as using an array of sensors strategically positioned on each element of the machine's kinematic chain. These sensors might include inclinometers, rotary encoders, or IMUs, providing data that can be fused together to create a comprehensive and accurate representation of the machine's pose. The pose of a mobile working machine could encompass its entire spatial configuration, describing both the location and orientation of its body and articulated parts. It's a snapshot of the machine's form in 3D space, essential for understanding its stability and preventing collisions.

In step 102, the system calculates the load currently being handled by the mobile working machine. For instance, in the case of a wheel loader, this would involve determining the weight of the material being carried in the bucket. This can be achieved through various sensor-based methods, such as pressure sensors in the hydraulic system or load cells integrated into the bucket structure. These sensors provide data that can be used to infer the weight of the payload based on the forces and torques acting on the machine's components. Such load estimation techniques are well-established in the prior art.

Step 103 combines the information gathered in the previous two steps. Using the calculated load from step 102 and the machine's pose from step 101, the system determines the position of the center of gravity. This is a crucial calculation, as the center of gravity significantly influences the machine's stability and its susceptibility to tipping. By dynamically tracking the center of gravity, the system can more accurately assess the risk of instability under various operating conditions.

The subsequent step, 104, utilizes the information gleaned from the preceding steps to determine the maximum driving velocity. In this particular embodiment, the calculated center of gravity plays a direct role in determining this velocity. However, the invention is not limited to this specific approach. Alternative embodiments might utilize the load information directly, without explicitly calculating the center of gravity. In either case, a predefined function, such as a lookup table or a mathematical formula, can be used to map the relevant input parameters (either center of gravity or load) to the corresponding maximum driving velocity. Furthermore, the steering angle of the mobile working machine can also be incorporated into this calculation, recognizing that turning while carrying a load further impacts stability.

Parallel to these machine-centric calculations, a separate branch of the method focuses on environmental awareness. In step 105, the system actively monitors the environment surrounding the mobile working machine. This involves using external sensors, such as radar, lidar, ultrasonic sensors, or cameras, to detect objects that could pose a collision risk. The system not only identifies these potential obstacles but also determines their position and velocity relative to the machine.

Step 106 builds upon this environmental data by predicting the future movement paths of both the mobile working machine and the detected objects. This prediction relies on established trajectory estimation techniques, taking into account the machine's current velocity and steering angle, as well as the observed motion of the external objects. A detailed explanation of these trajectory estimation methods is omitted here, as they are well-known within the prior art.

In step 107, the system assesses the potential for collision by checking whether the predicted path of the mobile working machine intersects with the safety zones of any detected objects. A safety zone represents a buffer area around an object within which a collision risk is considered significant. Based on this collision risk assessment, step 108 calculates an environment-based maximum driving velocity. This velocity represents the speed limit required to avoid a collision with any detected obstacles, given their predicted trajectories.

Step 109 compares the two calculated maximum velocities: the machine-state-based velocity from step 104 and the environment-based velocity from step 108. The system then selects the more restrictive of the two velocities, ensuring that both machine stability and collision avoidance are considered.

The resulting maximum allowable velocity is then transmitted to the machine's control unit 18 in step 110. **It** is to be noted that also the complete method described above can be executed by the control unit 18. This control unit 18 is responsible for governing the machine's movement, including engine power and braking.

Finally, in step 111, the system compares the machine's actual speed with the determined maximum velocity. If the actual speed is lower than the allowed maximum, no action is taken (step 113). However, if the actual speed exceeds the maximum, the system automatically intervenes in step 112 to slow the machine down, ensuring that the safety limits are actively enforced. This active intervention provides a crucial safety layer, preventing potentially dangerous situations and protecting both the operator and the machine itself.

While the present invention has been described with reference to the embodiments described above, it is clear for the skilled person that it is possible to realize several modifications, variations and improvements of the present invention in the light of the teaching described above and within the ambit of the enclosed claims without departing from the spirit and the scope of protection of the invention.

In addition, those areas in which it is believed that those of ordinary skill in the art are familiar, have not been described herein in order not to unnecessarily obscure the invention described.

Accordingly, the invention is not to be limited by the specific illustrative embodiments, but only by the scope of the appended claims.

## Claims

1. Method for determining a maximum driving velocity of a mobile working machine, the mobile working machine comprising a main body and a kinematic, which is configured to move an object with respect to the main body, the method comprising the following steps:
a. Determine a load of said mobile working machine;
b. Determine a maximum driving velocity of said mobile working machine based on said load or based on an information dependent on said load.

2. Method according to claim 1, wherein a center of gravity is determined based on said load determined in said step a. and on a pose of said kinematic, wherein in said step b. said information dependent on said load is said center of gravity so that said maximum driving velocity is determined based on said center of gravity of said mobile working machine.

3. Method according to claim 1 and 2, wherein in said step b. said maximum driving velocity is further determined based on a steering angle of sad mobile working machine.

4. Method according to any of claims 1 to 3, wherein an environment-based maximum driving velocity is calculated based on external bodies, which are detected in an environment of the mobile working machine, wherein a value of said maximum driving velocity determined in said step b. is compared with a value of said environment-based maximum driving velocity, wherein the value of said maximum driving velocity is substituted by the value of said environment-based maximum driving velocity for the case in which the value of said environment-based maximum driving velocity is lower than the value of said maximum driving velocity determined in step b.

5. Method for limiting a driving velocity of a mobile working machine, the mobile working machine comprising a main body and a kinematic, which is configured to move an object with respect to the main body, the method comprising the following steps:
c. Determine a maximum driving velocity of the mobile working machine according to any of claims 1 to 4;
d. Compare the maximum driving velocity with an actual driving velocity of the mobile working machine;
e. Limit the actual velocity of the mobile working machine for the case in which the actual driving velocity exceeds the maximum driving velocity determined in step c.

6. A control unit (18) configured to perform a method according to any of the preceding claims.

7. A mobile working machine (1) configured to handle loads, the mobile working machine (1) comprising a drive responsible for the machine's movement, the mobile working machine comprising a control unit according to claim 6.

8. Computer program that, when executed on a computing unit (18), causes the computing unit to perform a method according to any of claims 1 to 5.

9. A machine-readable storage medium (56) having stored thereon a computer program according to claim 8.
